# EUROPEAN PATENT SPECIFICATION

(11) **EP 1 781 498 B1**
(45) Date of publication and mention of the grant of the patent: **13.04.2011**
(21) Application number: 05756272.0
(22) Date of filing: 01.07.2005
(51) Int. Cl.: B60R 9/06

(54) **DEVICE FOR CLAMPING OF A LOAD CARRIER AT A TOWING HOOK OF A VEHICLE**
VORRICHTUNG ZUM FESTKLEMMEN EINER LASTTRAGEVORRICHTUNG AN EINER ANHÄNGERKUPPLUNG EINES FAHRZEUGS
DISPOSITIF D'ATTACHE D'UNE REMORQUE AU CROCHET D'ATTELAGE D'UN VEHICULE

(30) Priority: 05.07.2004 SE 0401731
(43) Date of publication of application: 09.05.2007
(73) Proprietor: Thule Sweden AB, 330 33 Hillerstorp (SE)
(72) Inventor: FERMAN, Magnus, S-331 54 Värnamo (SE); RAGNARSSON, Magnus, S-331 41 Värnamo (SE)
(86) International application number: PCT/SE2005/001052
(87) International publication number: WO 2006/004520

(56) References cited:
- EP-A- 1 095 820
- EP-A2- 1 170 178
- WO-A1-93/04895
- WO-A1-98/09841
- DE-U1- 9 413 008
- NL-A- 9 302 167

## Description

The present invention refers to a coupling device connecting a load carrier, associated with the device, to a ball of a towing hook assembled on a vehicle, which coupling device having a frame including a first fixed connected coupling means and a second movable connected coupling means, whereupon the movable coupling means by means of a clamping device is transferable in the direction against the fixed coupling means, whereby a firm connection between the towing hook and the coupling device is achieved when the towing hook being embraced by the coupling means, which have a curved shape adopted to said ball.

Through EP 1 095 820 which corresponds to the preamble of claim 1 is a coupling device of initially described kind previously known. The previously known coupling device includes cup-shaped gripping means, which embrace the towing ball and shows an internally defined surface that essential corresponds with the shape of the towing ball. The gripping means are associated with each other by means of a joint, located on distance from the ball, whereupon a force in order to clamp the gripping means together is applied on diametrical opposite sides of and on distance from the ball. A disadvantage with this is that the abutting surface against the ball, through deflection, tends to decrease at an increased clamping force.

The purpose with the present invention is to increase the abutting surface at tightening of the clamping device and thereby achieve a safer clamping of the coupling device at the towing hook at a vehicle.

The present invention overcomes the above stated disadvantages with a coupling device of initially stated kind, which being characterized in that at least the movable coupling means is made of a plate, whose curved shape having an inner diameter, which is somewhat smaller than the diameter of the ball, and that the clamping device abutting directly against the centre of the curved shape of the movable coupling means, whereupon the clamping force act essentially against the midpoint of the ball.

The invention will from here on be described with reference to a preferred embodiment, as shown in the figures in which:

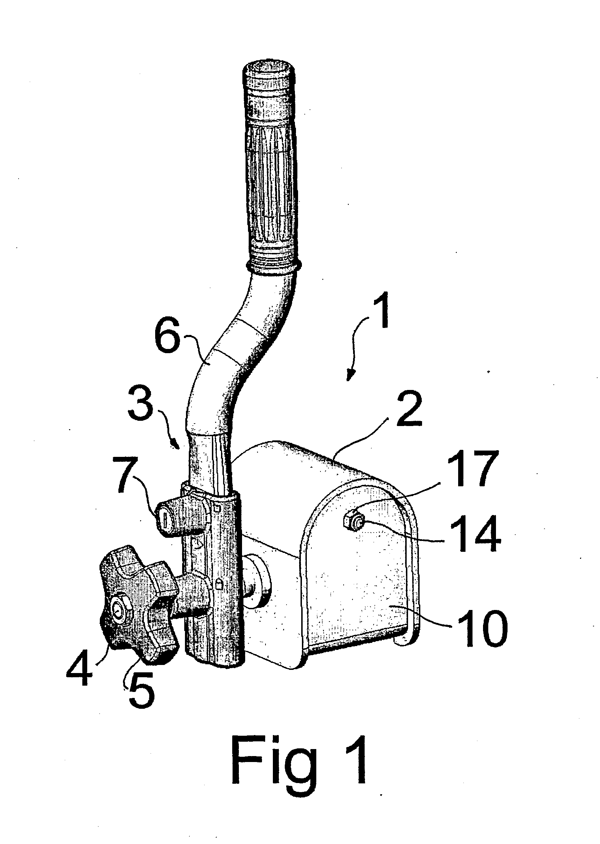

Fig. 1 is a schematic view in perspective of a coupling device according to the present invention.

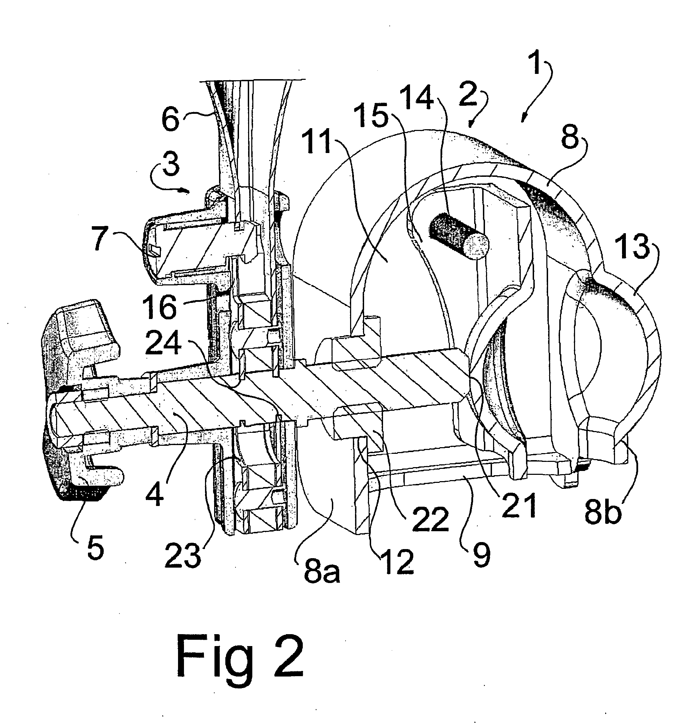

Fig. 2 is a schematic view in cross-section of the coupling device.
Fig. 3 is a view in perspective of a part of the frame with a fixed coupling means.

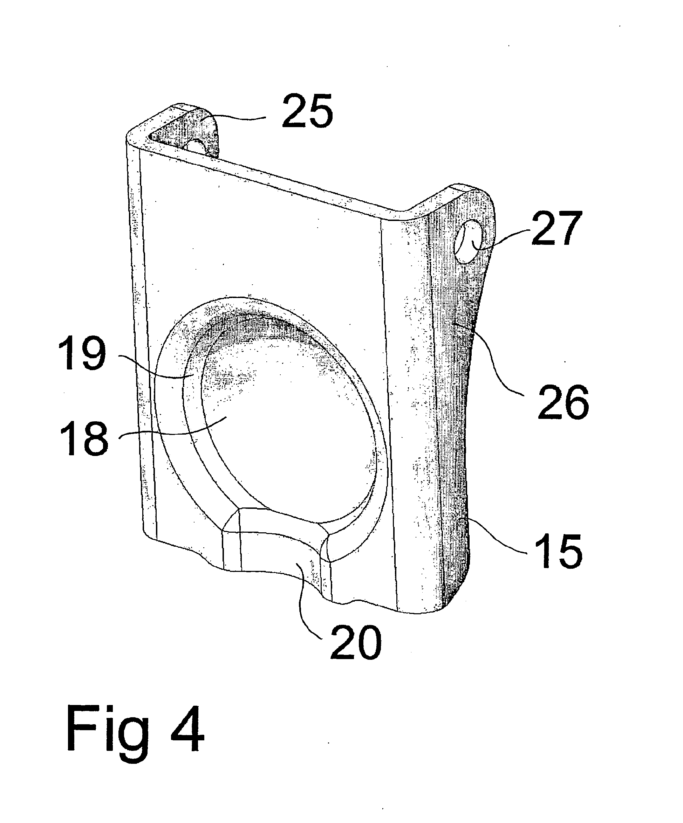

Fig. 4 is a view in perspective of movable coupling means.

In the figures, a coupling device 1 is shown including an essentially stable frame 2, preferably made of metal, which is associated with a load carrier (not shown), as a bicycle carrier, a load basket or similar, intended to be assembled on a ball of a towing hook arranged at a vehicle. The frame 2 is linked to a load carrier by means of a bolt joint (not shown), by welding or by other known method.

The frame 2 includes a house 8 with walls 10 and 11. To the frame 2 is a clamping device 3 arranged, which comprises a screw 4 threaded at the frame 2, with a handle 5 and a lever 6. The lever 6 includes a locking device 7. An axle 14 extends through the wall 10 and is fasten with a nut 17.

The house 8 is produced of a curved U-shaped plate, which is oriented so that an opening 9 is turned downward. The sides of the house 8 are covered by the walls 10 and 11 of flat sheet metals. Preferably, the walls 10 and 11 are welded to the house 8, but of course the whole frame could be produced on other ways, such as by casting or similar.

A hole 12 extends through one branch 8a of the U-shaped plate and the other branch 8b having a first fixed coupling means 13. The fixed coupling means 13 is formed, as shown in the figures, preferably of an embossing of the sheet metal to a curved shape, adopted to the ball at the towing hook (not shown). Naturally, the fixed coupling means could also be made of a separate part attached to the house 8.

An axle 14 extends through the sheet of the walls 10 and 11, which support a second movable coupling means 15. The movable coupling means 15 consists likewise of a bent and pressed sheet metal, which having a curved shape adapted to the ball of the towing hook.

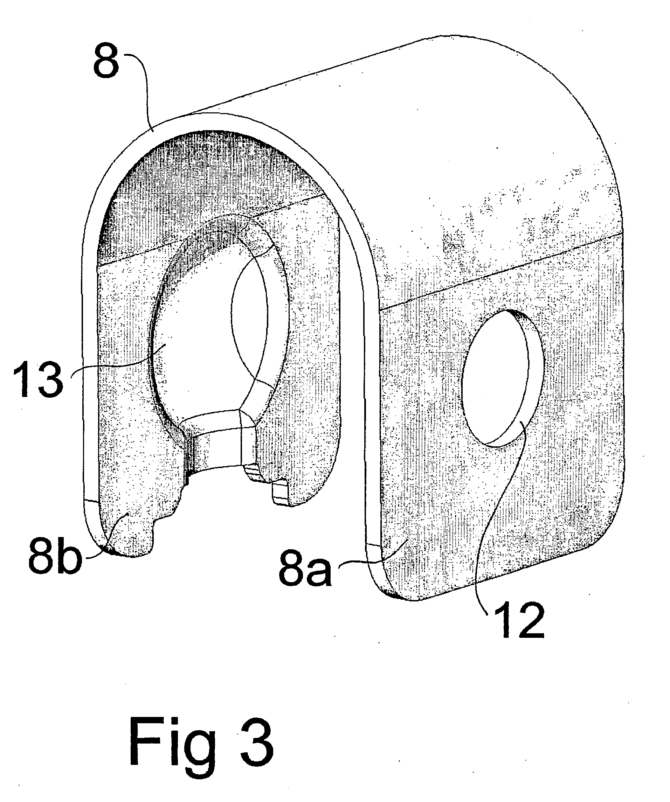

Figure 3 shows clearly how the movable coupling means 15 is shaped. The curved shape forms in the shown embodiment an essential half spherical recess 18. A cylindrical track 20 extends from the recess 18 to the edge of the coupling means in order to accommodate the actual towing hook. The edge portions 25 and 26 are bent and being provided with holes 27 for suspension of the coupling means 15 at the axle 14. The movable coupling means 15 is by means of the clamping device 3 transferable in the direction against the fixed coupling means 13, where through a firm connection between the towing hook and the coupling device 1 is achieved when the towing hook being enclosed by the coupling means 13 and 15.

Preferably the inside diameter of the coupling means 13 and 15 are somewhat smaller than the diameter of the ball. For example, at a diameter of the ball of 50 mm the inside diameter can be 49,6 mm. During clamping of the coupling means 15 a band-like area 19, extending around the circumference of the recess 18, will thereby constitute an abutment between the coupling means 15 and the ball. An important part of the invention is that the clamping device 3 lies directly against the centre 21 of the curved shape of the movable coupling means 15, i.e. at the opposite side of the bottom portion of the recess 18, and that the coupling means 15 is produced of hardened material, whereupon the clamping force act essentially in the direction of the midpoint of the ball. At tightening of the clamping device 3 the force will thus strive to widen the diameter on the half spherical recess 18, whereupon the band-shaped area 19 consequently increases at increased tightening. This result in a safer clamping of the coupling means at the towing hook.

Thus the clamping device 3 includes a screw 4 threaded to the frame 2, which extends through the frame to abutment against the centre 21 of the coupling means 15. In the shown embodiment, a threaded nut 22 or similar is attached at the hole 12. For fast transport and tightening of the screw 4, by means of hand force, a handle 5 is used. After this tightening of the screw 4 a lever 6 is engaged for tightening of the screw 4 to a desired abutment.

The lever 6 having a key cave shaped recess 23 through which the screw 4 in a first position runs freely and in a second position being moved in engagement with said lever 6. For this purpose, the screw 4 has two tracks 24 in which the lever 6 can be moved axially to engagement, whereupon the lever 6 is twisted together with the screw 4 to desired tightening.

The lever having also a second key cave shaped recess 16, in which a locking device 7 can be moved in engagement for securing of the lever 6 in a tighten position.

## Claims

1. Coupling device (1) connecting a load carrier, associated with the device, to a ball of a towing hook assembled on a vehicle, which coupling device having a frame (2) including a first fixed connected coupling means (13) and an second movable connected coupling means (15), whereupon the movable coupling means by means of a clamping device (3) is transferable in the direction against the fixed coupling means, whereby a firm connection between the towing hook and the coupling device is achieved when the towing hook being embraced by the coupling means (13, 15), which have a curved shape adopted to said ball, **CHRACTERISED** in that at least the movable coupling means (15) is made of a plate, whose curved shape having an inner diameter, which is somewhat smaller than the diameter of the ball, and that the clamping device (3) abutting directly against the centre (21) of the curved shape of the movable coupling means, whereupon the clamping force act essentially against the midpoint of the ball.

2. Coupling device according to claim 1, **CHARACTERIZED in that** the movable coupling means (15) is produced of hardened material.

3. Coupling device according to claim 2, **CHARACTERIZED in that** the clamping device (3) includes a handle (5) for tightening by means of hand force of a screw (4) threaded at the frame (2) and a connectable lever (6) for tightening of the screw (4) to desired abutment.

4. Coupling device according to claim 3, **CHARACTERIZED in that** the lever (6) having a key cave shaped recess (23) through which the screw (4) in a first position runs freely and in a second position being moved in engagement with said lever (6).

5. Coupling device according to claim 4, **CHARACTERIZED in that** the lever (6) having a second key cave shaped recess (16) in which a locking device (7) can be moved in engagement for securing of the lever (6) in a tighten position.

## Patentansprüche

1. Kupplungsvorrichtung (1), die einen der Vorrichtung zugeordneten Lastträger mit einer Kugel eines an einem Fahrzeug montierten Zughakens verbindet, wobei die Kupplungsvorrichtung einen Rahmen (2) mit einem ersten, fest verbundenen Kupplungsmittel (13) und einem zweiten, beweglich verbundenen Kupplungsmittel (15) enthält, wobei das bewegliche Kupplungsmittel mittels einer Klemmvorrichtung (3) in gegen das festgelegte Kupplungsmittel verlaufender Richtung verschiebbar ist, wodurch eine feste Verbindung zwischen dem Zughaken und der Kupplungsvorrichtung erreicht wird, wenn der Zughaken von den Kupplungsmitteln (13, 15) umfasst wird, die eine gekrümmte Form zur Aufnahme der Kugel aufweisen, **dadurch gekennzeichnet, dass** mindestens das bewegliche Kupplungsmittel (15) aus einer Platte besteht, deren gekrümmte Form einen Innendurchmesser aufweist, der etwas kleiner ist als der Durchmesser der Kugel, und dass die Klemmvorrichtung (3) direkt an der Mitte (21) der gekrümmten Form des beweglichen Kupplungsmittels anliegt, wobei die Klemmkraft im Wesentlichen gegen den Mittelpunkt der Kugel wirkt.

2. Kupplungsvorrichtung nach Anspruch 1, **dadurch gekennzeichnet, dass** das bewegliche Kupplungsmittel (15) aus einem gehärteten Material hergestellt ist.

3. Kupplungsvorrichtung nach Anspruch 2, **dadurch gekennzeichnet, dass** die Klemmvorrichtung (3) einen Griff (5) zum Festziehen einer mit dem Rahmen (2) verschraubten Schraube (4) mittels Handkraft und einen verbindbaren Hebel (6) zum Festziehen der Schraube (4) auf eine gewünschte Anlage enthält.

4. Kupplungsvorrichtung nach Anspruch 3, **dadurch gekennzeichnet, dass** der Hebel (6) eine schlüssellochförmige Aussparung (23) aufweist, durch die sich die Schraube (4) in einer ersten Position frei erstreckt und in einer zweiten Position in Eingriff mit dem Hebel (6) bewegt wird.

5. Kupplungsvorrichtung nach Anspruch 4, **dadurch gekennzeichnet, dass** der Hebel (6) eine zweite schlüssellochförmige Aussparung (16) aufweist, in der eine Verriegelungsvorrichtung (7) in Eingriff zur. Befestigung des Hebels (6) in einer festgezogenen Position bewegt werden kann.

## Revendications

1. Dispositif d'accouplement (1) reliant une remorque, associée au dispositif, à une boule d'un crochet d'attelage assemblé sur un véhicule, lequel dispositif d'accouplement ayant un cadre (2) comportant un premier moyen d'accouplement fixe connecté (13) et un deuxième moyen d'accouplement mobile connecté (15), le moyen d'accouplement mobile, par le biais d'un dispositif de serrage (3), pouvant être transféré dans la direction opposée au moyen d'accouplement fixe, une connexion solide entre le crochet d'attelage et le dispositif d'accouplement étant réalisée lorsque le crochet d'attelage est enserré par les moyens d'accouplement (13, 15), qui ont une forme courbe adaptée à ladite boule, **caractérisé en ce qu'**au moins le moyen d'accouplement mobile (15) est constitué d'une plaque, dont la forme courbe a un diamètre intérieure, qui est un peu plus petit que le diamètre de la boule, et **en ce que** le dispositif de serrage (3) bute directement contre le centre (21) de la forme courbe du moyen d'accouplement mobile, de sorte que la force de serrage agisse essentiellement contre le point central de la boule.

2. Dispositif d'accouplement selon la revendication 1, **caractérisé en ce que** le moyen d'accouplement mobile (15) est fabriqué en matériau trempé.

3. Dispositif d'accouplement selon la revendication 2, **caractérisé en ce que** le dispositif de serrage (3) comporte une poignée (5) pour serrer au moyen d'une force manuelle une vis (4) vissée sur le cadre (2) et un levier raccordable (6) pour serrer la vis (4) avec la butée souhaitée.

4. Dispositif d'accouplement selon la revendication 3, **caractérisé en ce que** le levier (6) a un retrait en forme de trou de clé (23) à travers lequel la vis (4), dans une première position, passe librement, et dans une deuxième position, est déplacée en prise avec ledit levier (6).

5. Dispositif d'accouplement selon la revendication 4, **caractérisé en ce que** le levier (6) a un deuxième retrait en forme de trou de clé (16) dans lequel un dispositif de verrouillage (7) peut être déplacé en prise avec le levier (6) de manière à le fixer dans une position serrée.
